# FASCICULE DE BREVET EUROPEEN

(11) **EP 3 825 594 B1**
(45) Date de publication et mention de la délivrance du brevet: **27.04.2022**
(21) Numéro de dépôt: 20206769.0
(22) Date de dépôt: 10.11.2020
(51) Int. Cl.: F16L 23/08, F16L 23/00, F16L 23/16, F16L 23/20, F16L 23/22

(54) **COLLIER DE SERRAGE**
ROHRSCHELLE
CLAMPING COLLAR

(30) Priorité: 20.11.2019 FR 1912959
(43) Date de publication de la demande: 26.05.2021
(73) Titulaire: Caillau, 92130 Issy-les-Moulineaux (FR)
(72) Inventeur: JACQUELIN, Arnaud, 41230 MUR DE SOLOGNE (FR); CHAGNON, Christophe, 41700 CONTRES (FR)
(74) Mandataire: Cabinet Beau de Loménie

(56) Documents cités:
- EP-A1- 1 451 498
- EP-A1- 2 598 785
- EP-A1- 3 217 059
- US-A- 4 655 481

## Description

### Arrière-plan de l'invention

Le présent exposé concerne un système de serrage pour le raccordement de deux tubes dont les extrémités en regard présentent des surfaces de serrage faisant saillie par rapport à la surface extérieure cylindrique desdits tubes, le système comprenant un collier ayant une bande apte à coopérer avec lesdites surfaces de serrage, le collier étant apte à être serré par une réduction du diamètre de la bande, la bande présentant un premier et un deuxième flanc entre lesquels est délimité un renfoncement interne apte à recevoir les surfaces de serrage.

Un système de serrage de ce type est connu par le brevet européen n° EP 1 451 498. La section de la bande du collier est par exemple sensiblement en forme de V ou de U, de façon que les ailes formées par cette section prennent respectivement appui sur la surface de serrage du premier tube et sur celle du deuxième tube. Ainsi, le serrage du collier tend à maintenir les tubes serrés l'un contre l'autre. La section en forme de V est intéressante dans la mesure où, lors du serrage du collier, elle rapproche les tubes l'un de l'autre.

Par exemple, le collier est serré à l'aide d'un système à vis. Ainsi, les extrémités de la bande peuvent être redressées de manière à former des pattes d'appui munies de perçages dans lesquels peut être insérée une vis. La tête de la vis est retenue par rapport à l'une de ces pattes, tandis qu'un écrou est retenu par rapport à l'autre patte, de sorte que la rotation relative entre la vis et l'écrou entraine le serrage du collier par une diminution du diamètre de la bande. Toutefois, cette diminution du diamètre de la bande peut être réalisée différemment, par exemple par accrochage d'une extrémité de la bande sur l'autre, en particulier à l'aide d'un crochet redressé par rapport à la bande et d'une oreille également redressée par rapport à la bande, le crochet s'accrochant derrière l'oreille pour maintenir le collier à l'état serré.

Dans EP 1 451 498, le système de serrage comporte en outre une rondelle qui est solidarisée au collier grâce à des pattes de fixation que comporte la rondelle, cette rondelle présentant par ailleurs des pattes qui sont aptes à s'agripper sur le premier tube lorsque le collier est pré-monté à l'extrémité de ce premier tube. Au sens de la présente description, "pré-monté" signifie que le tube est simplement emmanché à l'intérieur du collier, sans que ce dernier ne soit serré. Ainsi, le fait de retenir le collier à l'état pré-monté autour de l'extrémité du premier tube permet de le mettre en attente avant d'abouter les deux tubes et de serrer la bande du collier autour de leurs extrémités assemblées.

Le brevet européen n° EP 2 598 785 propose quant à lui d'équiper le système avec des premier et des deuxième moyens de pré-montage pour pré-monter le collier sur les premier et deuxième tubes, une fois qu'ils ont été rapprochés l'un de l'autre et emmanchés dans le collier. Ceci permet de réaliser le serrage du collier sans avoir à maintenir les deux tubes en position. Dans ce brevet, les premier et deuxième moyens de pré-montage peuvent être formés sur une seule rondelle portée par la bande du collier, en particulier par son premier flanc, ou bien par deux rondelles, à savoir une première rondelle analogue à celle du système du brevet EP 1 451 498, portée par le premier flanc, et une deuxième rondelle portée par le deuxième flanc.

Le brevet européen n° EP 3 217 059 propose un système de serrage comprenant un collier du type précité, une rondelle et des clips de pré-montage. La rondelle est retenue par rapport au collier et est munie de pattes permettant le pré-montage sur la surface de serrage de l'un des tubes. Les clips de pré-montage sont des clips individuels, qui sont retenus par rapport à la bande en étant pincés sur l'un de ses flancs, et permettent le pré-montage sur la surface de serrage de l'autre tube.

Les dispositifs précités apportent globalement satisfaction, mais ils imposent de recourir à une ou deux rondelles pour réaliser le pré-montage sur au moins l'un des tubes. Ces rondelles ayant une périphérie interne analogue à celle du collier, elles représentent une quantité de matériau relativement importante. De plus, leur géométrie est relativement complexe pour qu'elles puissent à la fois être correctement maintenues par rapport à la bande du collier sur l'intégralité de leur périphérie, et correctement retenir par rapport au collier les extrémités des tubes respectifs avec lesquelles elles coopèrent. Par ailleurs, dans certains cas, la rondelle doit également assurer une autre fonction que celle du pré-montage, par exemple une fonction d'étanchéité. Dans certains cas, cette fonction ne peut être assurée que si la rondelle présente une épaisseur précise, qui n'est pas toujours compatible avec l'élasticité que devraient avoir les pattes de pré-montage pour correctement assurer leur fonction, étant entendu que ces pattes présentent en principe la même épaisseur que la rondelle puisqu'elles sont réalisées à partir d'un même feuillard.

La combinaison d'une rondelle et de clips individuels est intéressante pour réaliser un pré-montage sur les surfaces de serrage des deux tubes, mais elle impose toujours de recourir à une rondelle de forme complexe pour le pré-montage sur l'un des tubes, et impose en outre de monter les divers éléments selon des processus différents.

L'exposé concerne un système de serrage pour le raccordement de deux tubes dont les extrémités en regard présentent des surfaces de serrage faisant saillie par rapport à la surface extérieure cylindrique desdits tubes, le système comprenant un collier ayant une bande apte à coopérer avec lesdites surfaces de serrage, le collier étant apte à être serré par une réduction du diamètre de la bande, la bande présentant un premier et un deuxième flanc entre lesquels est délimité un renfoncement interne apte à recevoir les surfaces de serrage, le système comprenant au moins un clip de retenue comprenant :
- une traverse qui s'étend en travers du renfoncement interne,
- une première et une deuxième aile qui s'étendent radialement vers l'extérieur par rapport à la traverse en coiffant respectivement le premier et le deuxième flanc, et
- une première et une deuxième configuration de retenue comprenant chacune au moins une patte de retenue qui s'étend radialement vers l'intérieur par rapport à la traverse,
   la traverse étant apte à s'effacer lors du serrage du collier.
L'indication selon laquelle la traverse est apte à s'effacer lors du serrage du collier signifie que, lors du serrage du collier, la configuration de la traverse se modifie de telle sorte que la traverse ne forme pas obstacle à ce serrage. En particulier, la traverse peut se déformer et/ou se rompre.

Optionnellement, la traverse s'étend entre la première et la deuxième aile en étant optionnellement rattachée à des bords internes des ailes.

Optionnellement, les pattes de retenue sont rattachées à des bords internes des ailes.

Optionnellement, la bande présente une portion annulaire de faîtage qui s'étend entre les premier et deuxième flancs et le clip de retenue présente des pattes de faîtage coiffant au moins partiellement la portion annulaire de faîtage.

Optionnellement, la portion annulaire de faîtage présente une configuration de calage avec laquelle coopèrent les pattes de faîtage, la configuration de calage comprenant optionnellement un orifice ou une cuvette dans laquelle pénètrent les pattes de faîtage.

Optionnellement, à l'état non serré du collier, la première et la deuxième aile coiffent respectivement le premier et le deuxième flanc avec un jeu.

Optionnellement, la première et la deuxième aile sont configurées pour s'écarter l'une de l'autre pour faciliter la déformation de la traverse pour pénétrer dans le renfoncement interne.

Optionnellement, les première et deuxième ailes sont configurées pour être disjointes à leurs extrémités radiales externes.

Optionnellement, les ailes sont configurées pour pouvoir être retenues de manière amovible à l'encontre d'un écartement de leurs extrémités radiales externes.

Optionnellement, la traverse présente au moins un bord plié vers l'intérieur présentant une indentation.

Optionnellement, l'indentation comprend une encoche délimitée entre deux portions de rebord, l'une des portions de rebord présentant optionnellement une portion en forme de languette étendue vers l'intérieur.

Optionnellement, le système de serrage comprend en outre un joint annulaire disposé à l'intérieur de la bande et coopérant avec le clip de retenue.

Optionnellement, le clip de retenue est formé en une seule pièce, optionnellement une pièce métallique découpée et pliée à partir d'une plaque, par exemple un feuillard.

Optionnellement, au moins l'une des première et deuxième configurations de calage comprend deux pattes de retenue situées de part et d'autre de la traverse.

Optionnellement, le système comprend une pluralité de clips de retenue similaires, répartis angulairement.

Optionnellement, la traverse est configurée pour être déformée pour pénétrer dans le renfoncement interne.

Le clip de retenue permet donc, en un seul élément de configuration simple, de réaliser un pré-montage par rapport aux surfaces de serrage des deux tubes. Il est possible de positionner le clip de retenue à l'endroit voulu de la circonférence de la bande. On peut utiliser plusieurs clips de retenue, répartis angulairement. Le ou chaque clip de retenue réalise à lui seul le pré-montage par rapport aux deux tubes. Les zones d'engagement entre le clip et les surfaces de serrage sont définies par la géométrie du clip, ce qui permet d'optimiser la répartition des efforts de retenue du pré-montage. Par exemple, ces zones d'engagement sont alignées axialement.

Lorsque le système de serrage comprend en outre un joint d'étanchéité, on dispose d'une grande liberté quant à la matière de ce joint et sa géométrie, puisqu'il peut être décorrélé de la partie du système qui réalise le pré-montage c'est-à-dire, en l'espèce le ou les clips de pré-montage. Le joint peut notamment être multicouche ou composite (par exemple à base mica) et/ou être en métal du type inox ayant reçu un traitement de surface.

Le présent exposé sera bien compris et ses avantages apparaîtront mieux à la lecture de la description détaillée qui suit, d'un mode de réalisation représenté à titre d'exemple non limitatif.

### Brève description des dessins

[Fig. 1] La figure 1 est une vue en perspective montrant le système de serrage et les extrémités de deux tubes avant l'assemblage de ce système sur ces extrémités.
[Fig. 2] La figure 2 montre en perspective un clip de retenue du système de serrage.
[Fig. 3] La figure 3 est une vue en coupe dans le plan III de la figure 1, alors que les extrémités des deux tubes sont prémontées avec le système de serrage.
[Fig. 4] La figure 4 est une vue en coupe dans un plan perpendiculaire à l'axe A du collier.
[Fig. 4A] La figure 4A est un agrandissement d'une partie de la figure 4.
[Fig. 5] La figure 5 est une vue analogue à la figure 3 pour une variante de réalisation.
[Fig. 6] La figure 6 est une vue en perspective d'un clip de retenue utilisé dans cette variante.
[Fig. 7] La figure 7 est une vue partielle en perspective montrant la coopération entre un tel clip de retenue et un joint d'étanchéité.
[Fig. 8] La figure 8 est une vue analogue aux figures 3 et 5, pour une autre variante.
[Fig. 9] La figure 9 est une vue en perspective d'un clip de retenue utilisé dans cette autre variante.
[Fig. 10] La figure 10 est une vue analogue à la figure 1 pour encore une autre variante.
[Fig. 11] La figure 11 est une vue analogue aux figures 3, 5 et 8 pour cette autre variante.
[Fig. 12] La figure 12 est une vue en perspective d'un clip de retenue utilisé dans cette autre variante.
[Fig. 13] La figure 13 est une vue partielle en perspective montrant la coopération entre le clip de retenue selon cette autre variante et un joint d'étanchéité.
[Fig. 14] La figure 14 est une vue analogue aux figures 3, 5, 8 et 11, montrant, pour la variante des figures 8 et 9, la situation à l'état serré du collier.

### Description détaillée de l'objet de l'exposé

Le collier du système de serrage selon le présent exposé est par exemple globalement analogue à celui que décrivent les documents EP 1 451 498, EP 2 598 785 et EP 3 217 059.

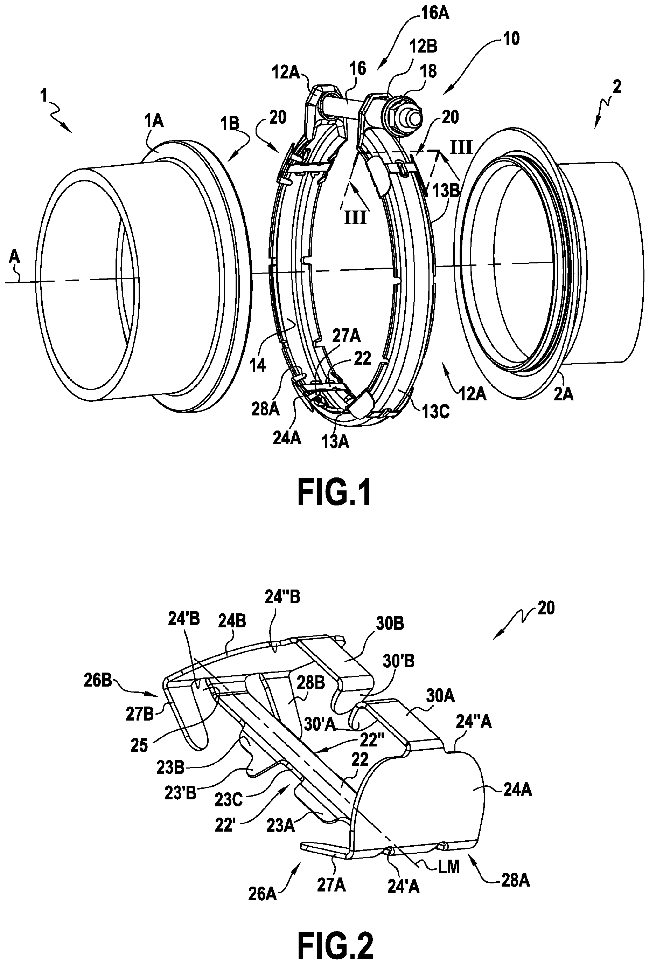

Ainsi, comme on le voit en particulier sur les figures 1 à 3, ce collier 10 comporte une bande 12 qui présente un premier flanc 13A et un deuxième flanc 13B entre lesquels est délimité un renfoncement interne 14.

Dans toute la suite, sauf indications contraires, on qualifiera de "internes" les éléments qui sont dirigés vers l'axe A du collier (c'est-à-dire l'axe A de l'anneau formé par la bande du collier) ou qui sont les plus proches de cet axe A par rapport à d'autres éléments qualifiés de "externes", les éléments "externes" sont également ceux qui sont dirigés à l'opposé de l'axe A.

Le système de serrage sert à raccorder deux tubes par leurs extrémités. Ainsi, la figure 1 montre un premier tube 1 et un deuxième tube 2, qui présentent respectivement une première surface de serrage 1A et une deuxième surface de serrage 2A en saillie par rapport à leurs surfaces extérieures cylindriques respectives. Pour l'assemblage des tubes 1 et 2, le système de serrage peut être disposé autour des extrémités assemblées des tubes, de sorte que les surfaces de serrage 1A et 2A se trouvent dans le renfoncement 14 de la bande 12. Dans cette situation, les flancs 13A et 13B coopèrent respectivement avec les surfaces de serrage 1A et 2A, de sorte que le serrage du collier maintient les deux extrémités.

La bande 12 présente par exemple une section sensiblement en U ou en V. En l'espèce, la section est de type mixte combinant un U et un V puisque la bande présente une portion annulaire de faîtage 13C relativement large (la largeur de la bande étant sa dimension parallèle à l'axe A) qui forme en quelque sorte la base d'un U, alors que ses flancs 13A et 13B sont inclinés comme les branches d'un V, en étant orientés vers l'axe A tout en ayant tendance à s'écarter progressivement l'un de l'autre à mesure que l'on progresse vers leurs bords internes respectifs 13'A et 13'B. Par ailleurs, les flancs 13A et 13B sont en l'espèce légèrement recourbés à leurs bords internes 13'A et 13'B jusqu'à devenir sensiblement parallèles à l'axe A.

De leur côté, les surfaces de serrage 1A et 2A ont un diamètre qui augmente graduellement vers les extrémités libres en regard des tubes, en étant par exemple de forme tronconique. Ainsi, le serrage du collier sur les surfaces de serrage des extrémités des tubes à assembler tend à rapprocher ces extrémités l'une de l'autre. En l'espèce, l'extrémité libre du premier tube 1 présente une surface terminale 1B qui, à partir du sommet de la surface de serrage 1A, est inclinée par rapport à un plan radial pour se rapprocher progressivement de l'axe du tube. En particulier, cette surface terminale 1B peut présenter une forme tronconique adaptée à la périphérie interne de la surface de serrage 2A du deuxième tube. Pour l'assemblage, les axes des tubes 1 et 2 sont évidemment alignés et coaxiaux avec l'axe A du collier.

Pour serrer le collier 10, on réduit le diamètre de la bande 12. En l'espèce, la bande 12 présente des extrémités, respectivement 12A et 12B, qui sont redressées sensiblement radialement de manière à former des pattes d'appui. Ces pattes sont percées de manière à permettre le passage de la tige 16A d'une vis 16 à travers ces pattes. De manière connue en soi, la tête de la vis peut être retenue par rapport à la patte 12A, tandis qu'un écrou 18 coopère avec la patte 12B, de sorte que la rotation relative de la vis et de l'écrou dans le sens du vissage rapproche les pattes d'appui 12A et 12B l'une de l'autre et réduit donc le diamètre intérieur de l'anneau formé par la bande enroulée, ce qui permet de serrer le collier. Il peut également s'agir d'une tige filetée coopérant avec deux écrous.

Le système de serrage comporte au moins un clip de retenue 20 qui sert à maintenir ce système prémonté aux extrémités des tubes 1 et 2. En l'espèce, le système de serrage comporte une pluralité de clips de retenue qui sont répartis angulairement selon la circonférence du collier. En l'espèce, le système comprend quatre clips de retenue. Il pourrait en comprendre moins ou davantage.

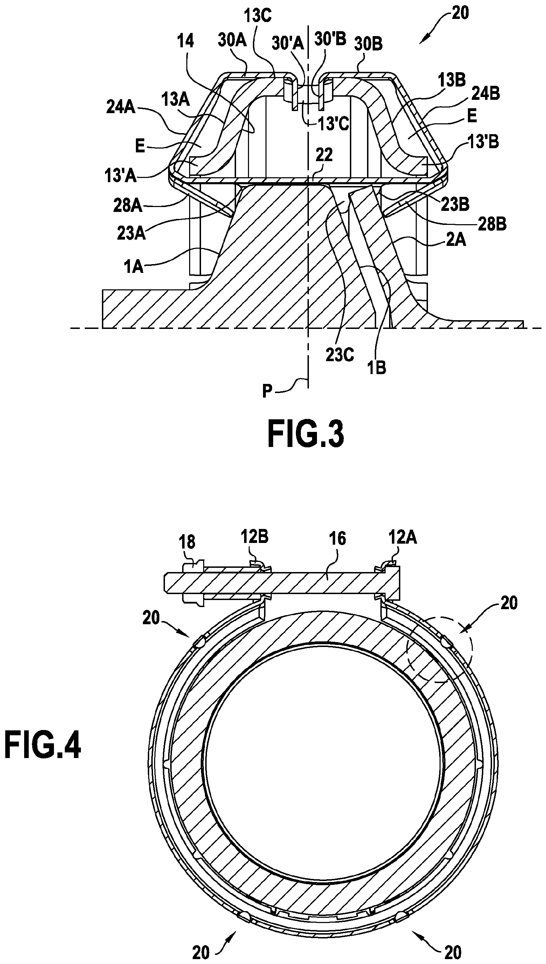

On voit sur les figures 2 et 3 que le clip de retenue 20 comprend une traverse 22 qui, lorsque le clip est en place sur le collier, s'étend en travers du renfoncement interne 14, du côté interne de ce renfoncement. Le clip comprend encore une première et une deuxième aile, respectivement 24A et 24B qui s'étendent radialement vers l'extérieur par rapport à la traverse 22. Lorsque le clip est en place sur la bande, les ailes 24A et 24B coiffent respectivement le premier flanc 13A et le deuxième flanc 13B.

L'indication selon laquelle les ailes 24A et 24B s'étendent radialement vers l'extérieur par rapport à la traverse signifie que ces ailes dépassent radialement vers l'extérieur par rapport à la traverse. Cependant, comme on le voit sur le dessin, elles peuvent ne pas s'étendre strictement dans des plans radiaux. En l'espèce, les ailes 24A et 24B sont inclinées de manière à aller en se rapprochant l'une de l'autre à mesure qu'elles s'éloignent de l'axe A du système de serrage. Chaque aile 24A ou 24B s'étend du côté externe du flanc 13A ou 13B respectif en recouvrant localement ce flanc. Ainsi, considérées ensemble comme on le voit sur la figure 3, les ailes délimitent une sorte de logement dans lequel une portion de la bande du collier est située.

Le clip de retenue présente également une première et une deuxième configuration de retenue, respectivement 26A et 26B. Comme on le voit sur la figure 3, les première et deuxième configurations de retenue 26A et 26B coopèrent respectivement avec la surface de serrage 1A du premier tube et la surface de serrage 2A du deuxième tube pour maintenir le système à l'état prémonté sur les extrémités des tubes. Chacune des configurations de retenue comprend au moins une patte de retenue qui s'étend radialement vers l'intérieur par rapport à la traverse 22. En l'espèce, chacune des configurations de retenue 26A et 26B comprend deux pattes de retenue, respectivement 27A, 28A et 27B, 28B qui, par rapport à la traverse 22, font radialement saillie vers l'intérieur. Pour chaque aile 24A ou 24B, la configuration de retenue 26A ou 26B comprend en l'espèce deux pattes de retenue, respectivement 27A, 28A et 27B, 28B qui s'étendent de part et d'autre de la traverse 22.

Les pattes de retenue sont en l'espèce inclinées de manière à aller en se rapprochant d'un plan radial médian P du collier perpendiculaire à l'axe A, à mesure qu'elles se rapprochent de l'axe A. Les extrémités libres des pattes de retenue sont donc dirigées vers ce plan radial et vers cet axe A. En d'autres termes, une patte de retenue située du côté d'une aile, par exemple la patte de retenue 27A située du côté de l'aile 24A va en se rapprochant vers son extrémité libre d'une patte de retenue située du côté de l'autre aile, par exemple la patte de retenue 27B située du côté de l'aile 24B.

La traverse 22 s'étend entre les ailes 24A et 24B en étant rattachée à leurs bords internes, respectivement 24'A et 24'B. Des encoches 25 sont délimitées entre la traverse et chaque patte de retenue, ce qui permet de dissocier les déformations et les mouvements des pattes de retenue et de la traverse 22. En l'espèce, les pattes de retenue 27A, 28A, 27B, 28B sont également rattachées aux bords internes 24'A, 24'B des ailes.

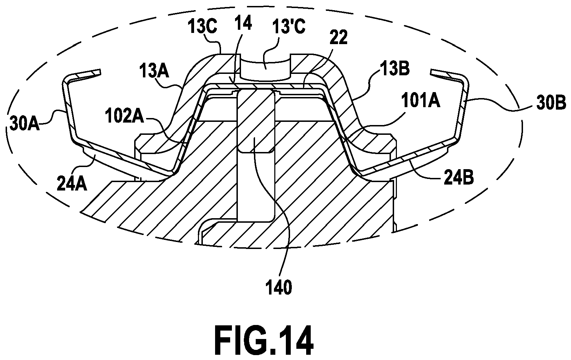

Comme on le voit sur la figure 3, à l'état non serré du collier, le clip de retenue étant monté sur la bande, la traverse 22 s'étend en travers du renfoncement interne 14, c'est-à-dire qu'elle forme en quelque sorte une forme de pont interne pour ce renfoncement. A l'étape prémontée, les sommets des surfaces de serrage 1A et 2A des tubes 1 et 2 sont situés du côté interne de la traverse 22, éventuellement en étant en contact avec la traverse comme montré sur la figure 3. Lors du serrage du collier, le diamètre de la bande se réduit et les flancs 13A et 13B viennent se positionner respectivement contre les surfaces de serrage 1A et 2A. Ceci signifie que ces surfaces de serrage pénètrent dans le renfoncement 14. Pour permettre cela, la traverse 22 s'efface, par exemple en se déformant jusqu'à venir se plaquer contre la paroi interne du renfoncement, ainsi qu'on le décrira plus en détail dans la suite en référence à la figure 14, ou bien en se cassant.

Comme on l'a indiqué précédemment, la bande 12 du collier présente une portion annulaire de faîtage 13C qui s'étend les premier et deuxième flancs 13A et 13B. Cette portion annulaire de faîtage est la zone à laquelle se rejoignent les flancs 13A et 13B. On voit que le clip de retenue s'étend en partie radialement à l'extérieur de la portion annulaire de faîtage 13C. En l'espèce, le clip de retenue 20 présente des pattes de faîtage, respectivement 30A, 30B qui coiffent partiellement la portion annulaire de faîtage 13C. En l'espèce, les pattes de faîtage 30A et 30B prolongent les ailes 24A et 24B à partir de leurs extrémités radiales externes 24"A et 24"B. Les pattes de faîtage 30A et 30B sont dirigées l'une vers l'autre. En l'espèce, les pattes de faîtage comprennent des extrémités, respectivement 30'A et 30'B, qui sont recourbées en crochets dirigés radialement vers l'extérieur, et coopèrent avec une configuration de calage de la bande. En l'espèce, la configuration de calage comprend un orifice 13'C de la portion annulaire de faîtage dans lequel pénètrent les extrémités en crochet des pattes de faîtage. Les pattes de faîtage et l'orifice 13'C servent ainsi à caler le clip de retenue 20 par rapport à la bande 12 du collier. D'autres configurations de calage pourraient être prévues. En particulier, les pattes de faîtage pourraient être recourbées en crochets sans s'étendre aussi loin radialement vers l'intérieur, et l'orifice pourrait être remplacé par une cuvette en dépression radialement vers l'intérieur dans laquelle pénétreraient ces extrémités recourbées ou bien par un autre relief coopérant avec les ailes ou les pattes de faîtage. Cette conformation permet, à état non serré du collier, d'éviter que les ailes 24A et 24B n'aient tendance à s'écarter intempestivement l'une de l'autre.

La coopération entre les pattes de faîtage et la configuration de calage permet ainsi de retenir les ailes à l'encontre d'un écartement de leurs extrémités radiales externes, mais les ailes peuvent être écartées tant que le clip de retenue n'est pas en place ou lorsque cette coopération cesse.

Lorsque le clip de retenue est en place sur la bande du collier et que l'on réalise le prémontage, on comprend que les surfaces de serrage 1A et 2A viennent s'engager radialement à l'intérieur de la traverse 22 à l'issue d'un déplacement axial relatif entre le collier et les surfaces de serrage respectives. Lors de ce déplacement axial, les sommets radiaux des surfaces de serrage 1A et 2A viennent respectivement coopérer avec les pattes de retenue 27A, 28A respectivement 27B, 28B pour que ces pattes s'effacent momentanément jusqu'à ce que la surface de serrage considérée ait dépassé l'extrémité libre de ces pattes dans le sens du rapprochement du plan radial médian P. Lors de cet effacement, un effet de levier pourrait amener les ailes 24A et 24B à s'écarter légèrement l'une de l'autre, ce qui peut être contré par leur élasticité naturelle et/ou par la configuration de calage reliant les pattes de faîtage à la bande comme décrit précédemment, ou reliant les ailes entre elles comme il sera décrit dans la suite.

Une fois que la surface de serrage considérée, 1A ou 2A, est parvenue vers le plan radial médian P au-delà de l'extrémité libre des pattes de retenue considérées, 27A, 28A ou 27B, 28B, ces pattes de retenue peuvent recouvrer naturellement leur position initiale de sorte que leurs extrémités libres respectives sont en appui contre les surfaces de serrage respectives 1A, 2A.

Par ailleurs, en l'espèce, la configuration de calage décrite ci-dessus permet également de déterminer la position du clip de retenue selon la circonférence de la bande.

On voit sur la figure 3 que, à l'état non serré du collier, la première et la deuxième aile 24A, 24B coiffent respectivement le premier et le deuxième flanc 13A, 13B avec un jeu, un espace E étant délimité entre la surface interne de l'aile considérée et la surface externe du flanc considéré. Ce jeu donne une certaine liberté de débattement aux ailes et aux pattes de retenue, facilitant le montage du clip de retenue sur la bande et l'effacement des pattes de retenue lors du prémontage ainsi qu'il a été décrit.

Les ailes 24A et 24B ne sont pas jointes à leurs extrémités radiales externes. En d'autres termes, les ailes peuvent s'écarter l'une de l'autre à leurs extrémités radiales externes, alors qu'elles sont reliées à leurs extrémités radiales internes par la traverse 22. Ainsi, le clip de retenue est monté sur la bande par l'intérieur de cette dernière. Pour ce faire, l'utilisateur présente le clip sous la bande, écarte les ailes 24A et 24B, et insère la bande dans l'espace interne ménagé entre les ailes, jusqu'à ramener les ailes de manière à coiffer les flancs 13A et 13B. En l'espèce, l'utilisateur ramène également les pattes de faîtage dans la position représentée sur la figure 3 et les amène à coopérer.

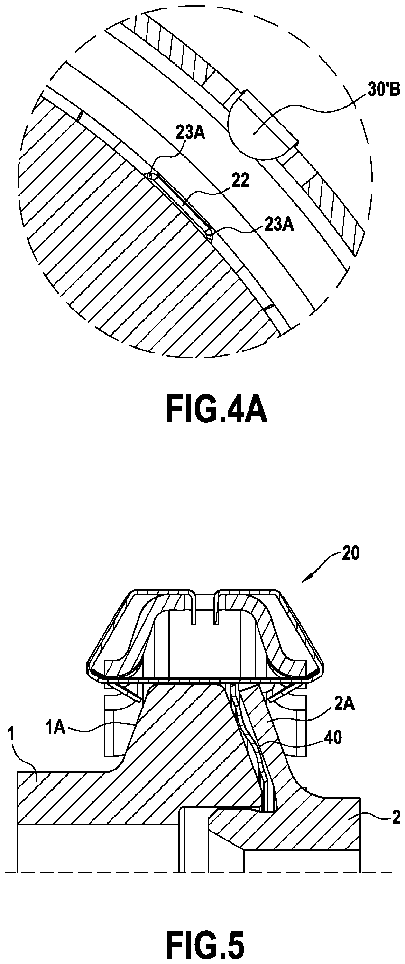

Comme indiqué, les ailes 24A et 24B sont disjointes à leurs extrémités radiales externes 24"A, 24"B à partir desquelles s'étendent les pattes de faîtage 30A, 30B. En particulier sur la figure 2, la traverse 22 présente au moins un bord plié vers l'intérieur présentant une indentation. En l'espèce, sur la figure 2, on voit l'un des bords 22' de la traverse 22, qui est transversal à l'axe A. On voit que ce bord 22' présente des portions de rebord pliées vers l'intérieur, respectivement 23A et 23B, entre lesquelles est ménagée une encoche 23C. Le bord opposé 22" de la traverse 22 est analogue par symétrie par rapport à un plan perpendiculaire à l'axe A et passant par la ligne médiane LM de la traverse 22, cette ligne médiane passant par le milieu de la largeur de la traverse 22, cette largeur étant mesurée parallèlement à l'axe A. L'indentation de chacun des bords 22' et 22" comprend donc une encoche délimitée entre deux portions de rebord repliées vers l'intérieur. La portion de rebord 23B présente une portion en forme de languette 23'B qui s'étend davantage vers l'intérieur. En référence aux figures 3 et 4A, on comprend qu'à l'état prémonté du système de serrage sur les extrémités des tubes, les sommets des surfaces de serrage 1A et 2A peuvent venir au contact des bords libres des portions de rebord 23A et 23B, et peut contribuer à éviter la rotation des tubes par rapport au système de serrage. Ceci favorise le maintien du système de serrage par rapport au tube. Les portions 23A et 23B peuvent, pour définir les dimensions diamétrales suffisantes à l'insertion des surfaces de serrage des tubes dans le système de serrage, se rabattre vers l'extérieur.

Dans l'exemple représenté sur la figure 3, le système de serrage ne comprend pas de rondelle d'étanchéité entre les tubes. Ainsi, à l'état prémonté, un interstice est ménagé entre la surface terminale 1B du tube 1 et la face interne de la surface de serrage 2A du tube 2. La portion en forme de languette 23C des bords 22' et/ou 22" de la traverse vient s'insérer dans cet interstice, contribuant ainsi au bon positionnement du système de serrage par rapport aux tubes. En particulier, la languette peut contribuer au remontage initial sur l'un des tubes, en calant le système de serrage du côté opposé à la surface de serrage du tube considéré. La languette agit comme une butée lors de l'insertion du système de serrage sur l'extrémité de ce tube.

Lors du serrage, comme indiqué précédemment, la traverse 22 se déforme pour venir se plaquer contre la paroi interne du renfoncement 14 de la bande et la languette 23C s'efface pour permettre la venue en contact des extrémités des tubes.

Pour le prémontage, les différents clips de retenue sont d'abord mis en place sur la bande. Ensuite, le système de serrage est amené sur l'extrémité de l'un des tubes, jusqu'à être retenu sur la surface de serrage 1A ou 2A de ce tube par les pattes de retenue 27A, 28A ou 27B, 28B, puis est amené sur l'extrémité de l'autre tube jusqu'à être retenu sur la surface de serrage 2A ou 1A de cet autre tube par les pattes de retenue 27B, 28B ou 27A, 28A.

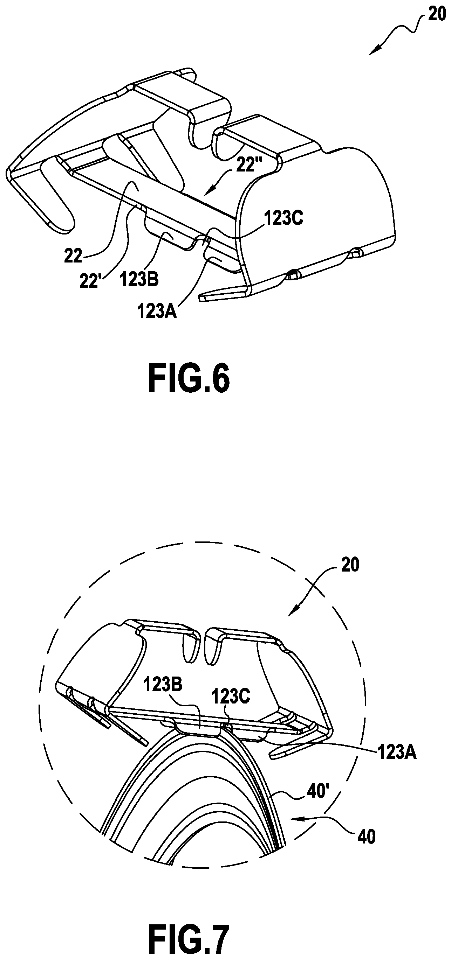

En référence aux figures 5 à 7, on décrit maintenant une variante. Comme on le voit sur la figure 5, selon cette variante, le système de serrage comprend une rondelle 40, en particulier une rondelle d'étanchéité disposée entre les surfaces en regard des tubes 1 et 2. Comme on le voit notamment sur la figure 7, cette rondelle a par exemple la forme d'un anneau tronconique présentant des déformations aptes à s'écraser lors du serrage des tubes pour venir en contact étanche avec les surfaces en regard des tubes. Le clip de retenue 20 est pratiquement identique à celui des figures précédentes. Il s'en distingue par la conformation des indentations des bords pliés 22' et 22" de la traverse 22. En effet, comme on le voit sur la figure 6, l'indentation du bord 22' présente deux portions de rebord 123A, 123B entre lesquelles est ménagée une encoche 123C, mais les portions de rebord ne présentent pas de prolongement en forme de languette contrairement à la portion de rebord 23b décrite précédemment. Les portions de rebord 123A et 123B viennent au contact des sommets des surfaces de serrage des tubes comme les portions de rebord 23A et 23B évoquées précédemment. L'encoche 123C reçoit le bord annulaire externe 40' de la rondelle d'étanchéité 40 et cale donc cette dernière axialement. Ainsi, on peut d'abord disposer plusieurs clips de retenue sur la bande du collier, puis mettre en place la rondelle d'étanchéité dans le système de serrage de telle sorte qu'elle soit maintenue par les encoches 123C des différents clips de retenues en étant ainsi "embarquée" dans le collier. Le système de serrage alors être prémonté à l'extrémité de l'un des tubes en étant retenu sur sa surface de serrage 1A ou 2A par les pattes de retenue 27A, 28A, ou les pattes de retenue 27B, 28B, puis amené sur l'extrémité de l'autre tube, en étant retenu prémonté sur sa surface de serrage 2A ou 1A par les autres pattes de retenu 27B, 28B ou 27A, 28A pour parvenir à la situation représentée à la figure 5.

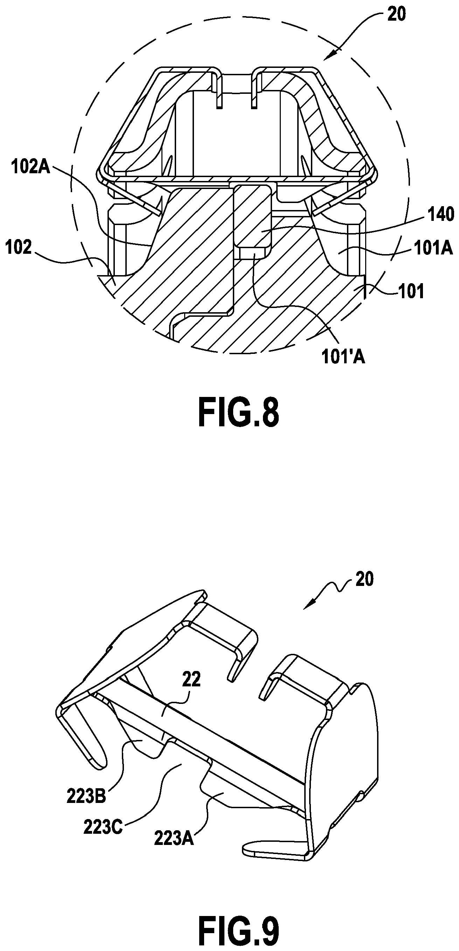

En référence aux figures 8 à 10, on décrit une autre variante utilisant un joint de conformation différente. Sur cette autre variante, le clip de retenue 20 est presque identique à celui qui a été décrit précédemment. Le système de serrage comprend un joint annulaire 140 qui est par exemple un jonc ou analogue, en matériau élastomère ou en matériau plus dur tel que du mica. On voit sur la figure 8 que ce joint annulaire est disposé entre les surfaces en regard des tubes 101 et 102 assemblés à l'aide du dispositif. Ces tubes sont légèrement différents de ceux qui ont été décrits précédemment. Ils présentent les surfaces de serrage 101A et 102A analogues aux surfaces de serrage 1A et 2A précédemment décrites, mais leurs surfaces en regard délimitent un logement 101'A pour recevoir le joint 140. En l'espèce, ce logement 101'A est ménagé par une gorge annulaire à l'extrémité du tube 101. Comme on le voit sur la figure 9, les indentations des bords de la traverse 22 du clip de retenue 20 sont légèrement différentes de celles qui ont été précédemment décrites. En l'occurrence, ces indentations comprennent, pour chaque bord, une encoche 223C ménagée entre deux portions de rebord 223A et 223B. La largeur de l'encoche 223C, mesurée entre les portions de rebord 23A et 23B est suffisante pour accueillir l'épaisseur du joint 140. On voit sur la figure 8 que le joint 140 est calé entre les portions de rebord 223A et 223B. Ce joint peut être embarqué dans le système de serrage comme décrit précédemment en référence aux figures 5 à 7.

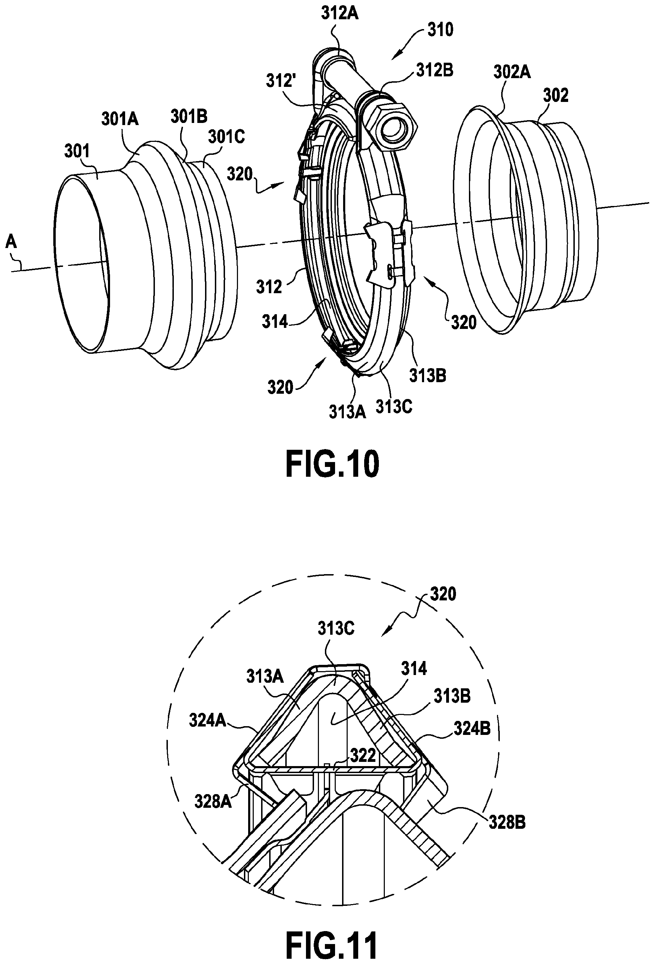

En référence aux figures 10 à 13, on décrit maintenant une autre variante. Sur ces figures, les éléments correspondant à ceux des figures 1 à 7 sont désignés par les mêmes références augmentées de 300.

Sur la figure 10, on voit les deux tubes 301 et 302, avec des surfaces de serrage 301A et 302A analogues à celles qui ont été précédemment décrites. Au-delà de la surface de serrage 301A, le tube 301 se prolonge par une jupe 301C, une surface 301B qui se rapproche de l'axe A en allant vers l'extrémité libre du tube étant ménagée entre la surface 301A et la jupe 301C. L'extrémité du tube 202 présente un évasé accueillant la jupe 301C. Il va de soi qu'il s'agit uniquement d'un exemple, les tubes pouvant être analogues à ceux qui ont été décrits en référence aux figures précédentes.

Le système de serrage comprend un collier 310 qui comprend une bande 312 qui, en l'espèce, comprend une semelle 312' prolongeant l'une des extrémités de la bande pour venir ponter l'espace intérieur situé entre les pattes de serrage 312A et 312B. En l'espèce, la bande présente une section en V, ainsi qu'on le voit sur la figure 11. Ainsi, la portion annulaire de faîtage 313C qui s'étend entre les flancs 313A et 313B présente une faible largeur mesurée parallèlement à l'axe A.

Les clips de retenue 320 sont légèrement différents des clips 20 précédemment décrits. Le clip de retenue 320 comprend les ailes 324A, 324B et les conformations de retenue 326A et 326B comprenant des pattes de retenue 327A, 328A et 327B, 328B. Le clip de retenue 320 présente également une traverse 322 analogue à la traverse 22 précédemment décrite. Les bords de la traverse 322 présentent des indentations comprenant une encoche 323C disposée entre des portions de rebord 323A et 323B.

Cette variante se distingue des précédentes d'une part par la conformation des configurations de calage entre le clip de retenue et la bande du collier. En l'espèce, les extrémités radiales externes des ailes 324A et 324B sont prolongées par des pattes de faîtage, respectivement 330A et 330B. Ces pattes sont décalées selon la longueur du clip de retenue 320, cette longueur étant en l'espèce mesurée selon la circonférence de la bande du collier. Les extrémités libres des pattes de faîtage, respectivement 330'A et 330'B sont repliées vers l'intérieur pour former des crochets. La différence des variantes précédentes, ces pattes ne s'accrochent pas dans une configuration de calage formée sur la bande, mais chaque patte portée par une aile s'accroche dans l'autre aile. Ainsi, l'aile 324B comprend une portion d'accrochage 325B pour l'extrémité 330'A de la patte de faîtage 330A et, de même, l'aile 324A comprend une portion d'accrochage 325A pour l'extrémité 330'B de la patte de faîtage 330B. Ceci permet de retenir les deux ailes 324A et 324B l'une par rapport à l'autre en évitant que leurs extrémités radiales externes, respectivement 324"A et 324"B n'aient tendance à s'écarter l'une de l'autre. En l'espèce, les configurations d'accrochage 325A et 325B sont formées par des orifices dans les ailes. Il pourrait bien entendu s'agir de conformations différentes, par exemple des cuvettes.

Ainsi, les ailes peuvent être retenues à l'encontre d'un écartement de leurs extrémités radiales externes, mais cette retenue est amovible car les pattes de faîtage peuvent être décrochées pour permettre cet écartement.

Ainsi, pour mettre en place le clip de retenue sur la bande du collier, on s'assure que les extrémités des pattes de faîtage sont dégagées par rapport aux conformations d'accrochage, de manière à écarter les ailes et à passer le clip par l'intérieur jusqu'à ce que la bande 312 vienne se loger dans l'espace ménagé entre les ailes 324A et 324B. On peut alors refermer ces ailes en accrochant les pattes de faîtage dans les configurations d'accrochage.

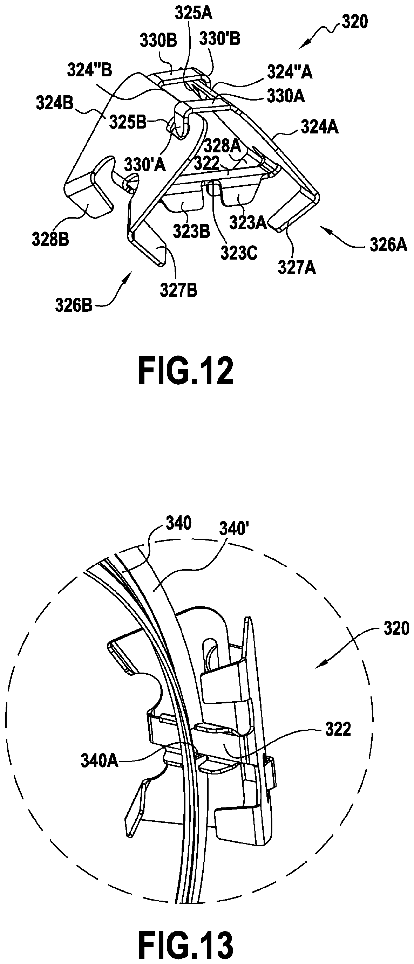

Par ailleurs, cette variante se distingue des précédentes par le fait qu'elle permet un calage angulaire du joint d'étanchéité 340 par rapport au clip de retenue. En effet, comme on le voit sur la figure 13, le bord 340' de ce joint annulaire 340 présente une encoche 340A dans laquelle vient se loger la traverse 322 du clip 320. Bien entendu, il y a autant d'encoches 340A que de clips.

Les figures 3, 5, 8 et 11 montrent le système de serrage à l'état prémonté, dans lequel la traverse du clip de retenue ponte le renfoncement de la bande du côté interne. Dans cet état prémonté, les sommets des surfaces de serrage des tubes sont situés contre la face interne de cette traverse sans pénétrer dans le renfoncement de la bande. La figure 14 montre, pour l'exemple de la variante des figures 8 et 9, la situation alors que le collier a été serré sur les tubes. On voit que, dans cette situation, la traverse de retenue 22 a été plaquée contre la face interne du renfoncement 14 de la bande. Cette déformation a provoqué l'écartement des ailes 24A et 24B du clip de retenue. Les pattes de faîtage 30A et 30B se sont ainsi décrochées de l'orifice 13'C. Les pattes de retenue se sont en même temps plaquées contre les surfaces de serrage 101A et 102A. Par sa déformation, la traverse s'efface et permet le serrage. On pourrait concevoir d'autres façons pour la traverse de s'effacer, par exemple une rupture.

Le clip de retenue qui a été décrit en relation avec les différentes variantes peut être formé en une seule pièce, en particulier sous la forme d'une pièce métallique découpée et pliée à partir d'une plaque ou d'un feuillard métallique de faible épaisseur, par exemple comprise entre 0,2 et 0,6 mm.

Le système de serrage peut être livré prémonté, les clips de retenue étant en place sur la bande du collier et, lorsqu'un joint est prévu, ce joint étant également en place en étant par exemple retenu dans les encoches des indentations qui ont été décrites.

## Revendications

1. Système de serrage pour le raccordement de deux tubes (1, 2 ; 101, 102 ; 301, 302) dont les extrémités en regard présentent des surfaces de serrage (1A, 2A ; 101A, 102A ; 301A, 302A) faisant saillie par rapport à la surface extérieure cylindrique desdits tubes, le système comprenant un collier (10 ; 310) ayant une bande (12 ; 312) apte à coopérer avec lesdites surfaces de serrage, le collier étant apte à être serré par une réduction du diamètre de la bande, la bande présentant un premier et un deuxième flanc (13A, 13B ; 313A, 313B) entre lesquels est délimité un renfoncement interne (14 ; 314) apte à recevoir les surfaces de serrage, le système comprenant de plus au moins un clip de retenue (20 ; 320) comprenant :
- une traverse (22 ; 322) qui s'étend en travers du renfoncement interne (14 ; 314),
- une première et une deuxième aile (24A, 24B ; 324A, 324B) qui s'étendent radialement vers l'extérieur par rapport à la traverse (22 ; 322) en coiffant respectivement le premier et le deuxième flanc (13A, 13B ; 313A, 313B), et
- une première et une deuxième configuration de retenue (26A, 26B ; 326A, 326B) comprenant chacune au moins une patte de retenue (27A, 28A, 27B, 28B ; 327A, 328A, 327B, 328B) qui s'étend radialement vers l'intérieur par rapport à la traverse (22 ; 322), la traverse (22 ; 322) étant apte à s'effacer lors du serrage du collier.

2. Système de serrage selon la revendication 1, dans lequel la traverse (22 ; 322) s'étend entre la première et la deuxième aile (24A, 24B ; 324A, 324B) en étant optionnellement rattachée à des bords internes des ailes (24'A, 24'B ; 324'A, 324'B).

3. Système de serrage selon la revendication 1 ou 2, dans lequel les pattes de retenue (27A, 28A, 27B, 28B ; 327A, 328B, 327B, 328B) sont rattachées à des bords internes des ailes (24'A, 24'B ; 324'A, 324'B).

4. Système de serrage selon l'une des revendications 1 à 3, dans lequel la bande (12 ; 312) présente une portion annulaire de faîtage (13C ; 313C) qui s'étend entre les premier et deuxième flancs (13A, 13B ; 313A, 313B) et le clip de retenue (20 ; 320) présente des pattes de faîtage (30A, 30B ; 330A, 330B) coiffant au moins partiellement la portion annulaire de faîtage.

5. Système de serrage selon la revendication 4, dans lequel la portion annulaire de faîtage (13C) présente une configuration de calage (13'C) avec laquelle coopèrent les pattes de faîtage (30A, 30B), la configuration de calage comprenant optionnellement un orifice (13'C) ou une cuvette dans laquelle pénètrent les pattes de faîtage (30A, 30B).

6. Système de serrage selon l'une des revendications 1 à 5, dans lequel, à l'état non serré du collier (10 ; 310), la première et la deuxième aile (24A, 24B ; 324A, 324B) coiffent respectivement le premier et le deuxième flanc (13A, 13B ; 313A, 313B) avec un jeu (E).

7. Système de serrage selon l'une des revendications 1 à 6, dans lequel, la première et la deuxième aile (24A, 24B ; 324A, 324B) sont configurées pour s'écarter l'une de l'autre pour faciliter la déformation de la traverse (22 ; 322) pour pénétrer dans le renfoncement interne (14 ; 314).

8. Système de serrage selon l'une des revendications 1 à 7, dans lequel les première et deuxième ailes (24A, 24B) sont configurées pour être disjointes à leurs extrémités radiales externes (24"A, 24"B).

9. Système de serrage selon l'une des revendications 1 à 8, dans lequel les ailes (24A, 24B ; 324A, 324B) sont configurées pour pouvoir être retenues de manière amovible à l'encontre d'un écartement de leurs extrémités radiales externes.

10. Système de serrage selon l'une des revendications 1 à 9, dans lequel la traverse (22 ; 322) présente au moins un bord plié vers l'intérieur présentant une indentation (23A, 23B, 23C ; 123A, 123B, 123C ; 223A, 223B, 223C ; 323A, 323B, 323C).

11. Système de serrage selon la revendication 10, dans lequel l'indentation comprend une encoche (23C ; 123C ; 223C ; 323C) délimitée entre deux portions de rebord (23A, 23B ; 123A, 123B ; 223A, 223B ; 323A, 323B), l'une des portions de rebord présentant optionnellement une portion en forme de languette (23'B) étendue vers l'intérieur.

12. Système de serrage selon l'une des revendications 1 à 11, comprenant en outre un joint annulaire (40, 140, 340) disposé à l'intérieur de la bande (12 ; 312) et coopérant avec le clip de retenue (20 ; 320).

13. Système de serrage selon l'une des revendications 1 à 12, dans lequel le clip de retenue (20 ; 320) est formé en une seule pièce, optionnellement une pièce métallique découpée et pliée à partir d'une plaque, par exemple un feuillard.

14. Système de serrage selon l'une des revendications 1 à 13, dans lequel au moins l'une des première et deuxième configurations de retenue (26A, 26B ; 326A, 326B) comprend deux pattes de retenue (27A, 28A, 27B, 28B ; 327A, 328A, 327B, 328B) situées de part et d'autre de la traverse.

15. Système de serrage selon l'une des revendications 1 à 14, comprenant une pluralité de clips de retenue (20 ; 320) similaires, répartis angulairement.

16. Système de serrage selon l'une des revendications 1 à 15, dans lequel la traverse (22; 322) est configurée pour être déformée pour pénétrer dans le renfoncement interne (14 ; 314).

## Patentansprüche

1. Spannsystem zur Verbindung von zwei Rohren (1, 2; 101, 102; 301, 302), deren einander gegenüberliegende Enden Spannflächen (1A, 2A; 101A, 102A; 301A, 302A) aufweisen, die im Vergleich zu der zylindrischen Außenfläche der Rohre hervorstehen, wobei das System eine Schelle (10; 310) umfasst, die einen Streifen (12; 312) aufweist, der dazu geeignet ist, mit den Spannflächen zusammenzuwirken, wobei die Schelle dazu geeignet ist, durch eine Verringerung des Durchmessers des Streifens festgezogen zu werden, wobei der Streifen eine erste und eine zweite Flanke (13A, 13B; 313A, 313B) aufweist, zwischen denen eine innere Vertiefung (14; 314) begrenzt ist, die dazu geeignet ist, die Spannflächen aufzunehmen,
wobei das System zudem mindestens einen Halteclip (20; 320) umfasst, umfassend:
- eine Querstrebe (22; 322), die sich quer zu der inneren Vertiefung (14; 314) erstreckt,
- einen ersten und einen zweiten Flügel (24A, 24B; 324A, 324B), die sich in Bezug auf die Querstrebe (22; 322) radial nach außen erstrecken, indem sie die erste bzw. die zweite Flanke (13A, 13B; 313A, 313B) bedecken, und
- eine erste und eine zweite Haltekonfiguration (26A, 26B; 326A, 326B), die jeweils mindestens eine Haltelasche (27A, 28A, 27B, 28B; 327A, 328A, 327B, 328B) umfassen, die sich in Bezug auf die Querstrebe (22; 322) radial nach innen erstreckt, wobei die Querstrebe (22; 322) dazu geeignet ist, sich während des Spannens der Schelle zurückzuziehen.

2. Spannsystem nach Anspruch 1, wobei sich die Querstrebe (22; 322) zwischen dem ersten und dem zweiten Flügel (24A, 24B; 324A, 324B) erstreckt, indem sie gegebenenfalls an den Innenkanten der Flügel (24'A, 24'B; 324'A, 324'B) angebracht ist.

3. Spannsystem nach Anspruch 1 oder 2, wobei die Haltelaschen (27A, 28A, 27B, 28B; 327A, 328A, 327B, 328B) an den Innenkanten der Flügel (24'A, 24'B; 324'A, 324'B) angebracht sind.

4. Spannsystem nach einem der Ansprüche 1 bis 3, wobei der Streifen (12; 312) einen ringförmigen Gratabschnitt (13C; 313C) aufweist, der sich zwischen der ersten und zweiten Flanke (13A, 13B; 313A, 313B) erstreckt, und der Halteclip (20; 320) Gratlaschen (30A, 30B; 330A, 330B) aufweist, die den ringförmigen Gratabschnitt zumindest teilweise bedecken.

5. Spannsystem nach Anspruch 4, wobei der ringförmige Gratabschnitt (13C) eine Verkeilungskonfiguration (13'C) aufweist, mit der die Gratlaschen (30A, 30B) zusammenwirken, wobei die Verkeilungskonfiguration gegebenenfalls eine Öffnung (13'C) oder eine Mulde umfasst, in welche die Gratlaschen (30A, 30B) eindringen.

6. Spannsystem nach einem der Ansprüche 1 bis 5, wobei im ungespannten Zustand der Schelle (10; 310) der erste und der zweite Flügel (24A, 24B; 324A, 324B) die erste bzw. die zweite Flanke (13A, 13B; 313A, 313B) mit einem Spiel (E) bedecken.

7. Spannsystem nach einem der Ansprüche 1 bis 6, wobei der erste und der zweite Flügel (24A, 24B; 324A, 324B) dazu ausgestaltet sind, sich voneinander zu entfernen, um die Verformung der Querstrebe (22; 322) zum Eindringen in die innere Vertiefung (14; 314) zu vereinfachen.

8. Spannsystem nach einem der Ansprüche 1 bis 7, wobei der erste und der zweite Flügel (24A, 24B) dazu ausgestaltet sind, an ihren radialen äußeren Enden (24"A, 24"B) getrennt zu sein.

9. Spannsystem nach einem der Ansprüche 1 bis 8, wobei die Flügel (24A, 24B; 324A, 324B) dazu ausgestaltet sind, gegen einen Abstand zwischen ihren radialen äußeren Enden unbeweglich festgehalten zu werden.

10. Spannsystem nach einem der Ansprüche 1 bis 9, wobei die Querstrebe (22; 322) mindestens eine nach innen gebogene Kante aufweist, die eine Einbuchtung (23A, 23B, 23C; 123A, 123B, 123C; 223A, 223B, 223C; 323A, 323B, 323C) aufweist.

11. Spannsystem nach Anspruch 10, wobei die Einbuchtung eine Nut (23C; 123C; 223C; 323C) umfasst, die zwischen zwei Flanschabschnitten (23A, 23B; 123A, 123B; 223A, 223B; 323A, 323B) begrenzt ist, wobei einer der Flanschabschnitte gegebenenfalls einen Abschnitt in Form einer Zunge (23'B) aufweist, die sich nach innen erstreckt.

12. Spannsystem nach einem der Ansprüche 1 bis 11, ferner umfassend einen Dichtring (40, 140, 340), der im Inneren des Streifens (12; 312) angeordnet ist und mit dem Halteclip (20; 320) zusammenwirkt.

13. Spannsystem nach einem der Ansprüche 1 bis 12, wobei der Halteclip (20; 320) aus einem einzigen Stück, gegebenenfalls einem Metallstück, gebildet wird, das aus einer Platte, zum Beispiel einem Bandmaterial, herausgeschnitten und gebogen wird.

14. Spannsystem nach einem der Ansprüche 1 bis 13, wobei mindestens eine der ersten und zweiten Haltekonfiguration (26A, 26B; 326A, 326B) zwei Haltelaschen (27A, 28A, 27B, 28B; 327A, 328A, 327B, 328B) umfasst, die sich auf beiden Seiten der Querstrebe befinden.

15. Spannsystem nach einem der Ansprüche 1 bis 14, umfassend mehrere ähnliche Halteclips (20; 320), die winklig verteilt sind.

16. Spannsystem nach einem der Ansprüche 1 bis 15, wobei die Querstrebe (22; 322) dazu ausgestaltet ist, verformt zu werden, um in die innere Vertiefung (14; 314) einzudringen.

## Claims

1. A clamping system for connecting two tubes (1, 2; 101, 102; 301, 302) whose facing ends have clamping surfaces (1A, 2A; 101A, 102A; 301A, 302A) protruding relative to the cylindrical external surface of said tubes, the system comprising a collar (10; 310) having a strip (12; 312) able to cooperate with said clamping surfaces, the collar being able to be clamped by a reduction in the diameter of the strip, the strip having a first and a second flank (13A, 13B; 313A, 313B) between which an inner recess (14; 314) able to receive the clamping surfaces is delimited, the system comprising at least one retaining clip (20; 320) comprising:
- a cross-member (22; 322) which extends across the inner recess (14; 314),
- a first and a second wing (24A, 24B; 324A, 324B) which extend radially outwardly relative to the cross-member (22; 322) by covering respectively the first and the second flank (13A, 13B; 313A, 313B), and
- a first and a second retaining configuration (26A, 26B; 326A, 326B) each comprising at least one retaining leg (27A, 28A, 27B, 28B; 327A, 328A, 327B, 328B) which extends radially inwardly relative to the cross-member (22; 322), the cross-member (22; 322) being able to be removed upon clamping of the collar.

2. The clamping system according to claim 1, wherein the cross-member (22; 322) extends between the first and the second wing (24A, 24B; 324A, 324B) by being optionally attached to inner edges of the wings (24'A, 24'B; 324'A, 324'B).

3. The clamping system of claim 1 or 2, wherein the retaining legs (27A, 28A, 27B, 28B; 327A, 328A, 327B, 328B) are attached to inner edges of the wings (24'A, 24'B; 324'A, 324'B).

4. The clamping system according to any of claims 1 to 3, wherein the strip (12; 312) has an annular ridge portion (13C; 313C) which extends between the first and second flanks (13A, 13B; 313A, 313B) and the retaining clip (20; 320) has ridge legs (30A, 30B; 330A, 330B) covering at least partially the annular ridge portion.

5. The clamping system according to claim 4, wherein the annular ridge portion (13C) has a wedging configuration (13'C) with which the ridge legs (30A, 30B) cooperate, the wedging configuration optionally comprising a orifice (13'C) or a bowl into which the ridge legs (30A, 30B) penetrate.

6. The clamping system according to any of claims 1 to 5, wherein, in the non-clamped state of the collar (10; 310), the first and the second wing (24A, 24B; 324A, 324B) cover respectively the first and the second flank (13A, 13B; 313A, 313B) with a clearance (E).

7. The clamping system according to any of claims 1 to 6, wherein the first and the second wing (24A, 24B; 324A, 324B) are configured to move apart from each other to facilitate the deformation of the cross-member (22; 322) to penetrate into the inner recess (14; 314).

8. The clamping system according to any of claims 1 to 7, wherein the first and second wings (24A, 24B) are configured to be disjoined at their outer radial ends (24"A, 24"B).

9. The clamping system according to any of claims 1 to 8, wherein the wings (24A, 24B; 324A, 324B) are configured to be able to be removably retained against a spacing of their outer radial ends.

10. The clamping system according to any of claims 1 to 9, wherein the cross-member (22; 322) has at least one edge folded inwardly having an indentation (23A, 23B, 23C; 123A, 123B, 123C; 223A, 223B, 223C; 323A, 323B, 323C).

11. The clamping system according to claim 10, wherein the indentation comprises a notch (23C; 123C; 223C; 323C) delimited between two rim portions (23A, 23B; 123A, 123B; 223A, 223B; 323A, 323B), one of the rim portions having optionally a tab-shaped portion (23'B) extended inwardly.

12. The clamping system according to any of claims 1 to 11, further comprising an annular seal (40, 140, 340) disposed inside the strip (12; 312) and cooperating with the retaining clip (20; 320).

13. The clamping system according to any of claims 1 to 12, wherein the retaining clip (20; 320) is formed in one piece, optionally a metal part cut out and folded from a plate, for example a strap.

14. The clamping system according to any of claims 1 to 13, wherein at least one of the first and second retaining configurations (26A, 26B; 326A, 326B) comprises two retaining legs (27A, 28A, 27B, 28B; 327A, 328B, 327B, 328B) located on either side of the cross-member.

15. The clamping system according to any of claims 1 to 14, comprising a plurality of similar retaining clips (20; 320), distributed angularly.

16. The clamping system according to any of claims 1 to 14, wherein the cross-member (22; 322) is configured to be deformed to penetrate into the inner recess (14; 314).
